# EUROPEAN PATENT SPECIFICATION

(11) **EP 1 470 884 B1**
(45) Date of publication and mention of the grant of the patent: **19.12.2007**
(21) Application number: 03076236.3
(22) Date of filing: 25.04.2003
(51) Int. Cl.: B23D 61/12

(54) **Bandsaw blade**
Bandsägeblatt
Lame de scie à ruban

(43) Date of publication of application: 27.10.2004
(73) Proprietor: Kapman AB, 811 81 Sandviken (SE)
(72) Inventor: Hayden, Robert C., Cape Coral, FL 33990 (US)
(74) Representative: Axelsson, Nils Ake A.L.

(56) References cited:
- WO-A-02/42028
- US-A- 4 727 788
- US-A- 5 410 935
- US-B1- 6 269 722
- PATENT ABSTRACTS OF JAPAN vol. 2000, no. 13, 5 February 2001 (2001-02-05) -& JP 2000 271817 A (AMADA CO LTD), 3 October 2000 (2000-10-03)

## Description

The present invention concerns a bandsaw blade according to the preamble of claim 1 comprising a strip and teeth projecting therefrom, which teeth are arranged in recurring main groups, each main group comprising recurring geometrical subgroups and recurring setting subgroups. Such a bandsaw blade is known from JP 2 000 271 817.

### Prior art

Bandsaws have long been used for cutting of hard materials such as metal bars and profiles, their main advantage being that their thickness is lesser than for circular saws, thus wasting less material. They have disadvantages that have hitherto restricted their use, mainly due to the bandsaw blade loosing its torsional stiffness when the feed force resistance against the tool edge is high. This means that many tooth shapes and arrangements have been suggested with the purpose of reducing the feed force required and other force components that might twist the blade. Well known such arrangements include having some teeth straight and longer than others to guide the blade laterally, and letting teeth with unequal height and width divide the cut in several thick chips with lesser width, known as the "Triple Chip" geometry.

One way of reducing the effect of the resulting lateral forces on the toothed edge of the sawblade is to let teeth that have large lateral forces occur in pairs with opposite setting. If the distance between them is small enough they will both be in the cut most of the time, and their individual lateral forces will counterbalance one another. However, small distances also mean that a larger number of teeth will be cutting simultaneously, with a large resulting feed force when cutting solid sections, which is not desirable, or a small feed force on each tooth, which means inefficient cutting and excessive wear.

Another problem is the low in-plane stiffness for many feed forces acting in unison, with a great risk of vibrations if many teeth at equal distances are cutting, causing vibration, noise, rough surfaces and reduced blade life. The reduced blade life is the result of damage to the tooth edge resulting from vibration. If only a few teeth are cutting simultaneously, the lateral forces will not be counterbalanced, which will result in corrugated surfaces on the workpiece finish. For this reason there has always been a "rule of thumb" that a minimum of three cutting teeth should be in contact with the workpiece.

These problems make it difficult to design an optimal bandsaw even for a well defined task, and even more so if the bandsaw is to be used for a variety of tasks involving different thickness, hardness and shapes of the work pieces. Numerous tooth arrangements have been suggested for such situations. Differences in tooth height have been used not only for lateral guidance, but also to let a few longer teeth do most of the cutting in hard materials while still maintaining a reasonable cutting rate, and have all teeth actively cutting in soft materials.

Differences in tooth distances are used to avoid vibrations and to locate teeth of equal height in pairs without getting too many cutting at the same time. Differences in setting are used to divide the kerf width into more chips with improved chip formation and greater thickness. Three set widths are traditional, right-unset-left, but five or more also occur, where lower teeth have larger set widths than higher teeth have.

For rational production, the teeth should be arranged in recurrent groups, corresponding to the widths of grinding, milling, punching and setting tools. Very long recurrent groups require larger tools and larger machines which are very expensive or not always available.

Many suggested tooth arrangements, such as those according to US, A, 4 727 788, utilize differences in all three aspects, variable tooth heights-variable spacing -variable set magnitude, except for a few most are complicated and impractical to manufacture.

The invention according to US, B1, 6 269 722 relates to one way of designing teeth for metal bandsaws which is equally useful for hard and soft materials, which causes less vibrations than previous known saws for different materials, and which is still simple to manufacture with high precision. The number of actively cutting teeth is, however, small leading to vibration problems when cutting smaller sections. The cutting performance could also be improved.

Many setting patterns include teeth set to different widths. The concept of variable set levels is not in itself patented but is normally included, in most patents, as part of a specific geometrical and set geometry. Many of these proposed patterns combine different tooth heights, pitches and setting widths with a limited number of teeth in a recurrent main group, the length of which is normally limited by the capacity of tooth forming and or setting equipment. According to the 19^{th} embodiment of what is evident from US, A, 4 727 788 and US, A, 5 410 935 the recurrent group consists of only five teeth. This limits the maximum length of the recurring group to approximately five inches (0.125 m) for very coarse pitch bandsaw blades.

WO, A1, 02/42028 shows a saw blade comprising a plurality of composition patterns of first tooth groups and second tooth groups having a plurality of saw teeth. The tooth height of the second tooth groups is lower than that of the first tooth groups and/or the set amount of the second tooth groups is smaller than that of the first tooth groups and each one of the first tooth groups comprises at least one straight tooth. This arrangement is, however, not optimal.

### Summary of the invention

A first purpose of the present invention is to create a bandsaw blade with a larger number of cutting teeth per length unit of the blade than has been possible before while still maintaining the ability to cut difficult materials. A second purpose of the present invention is to create a bandsaw blade that shows improved performance in cutting smaller sections with less vibration and increased cutting life in comparison with prior art bandsaw blades. A third purpose of the present invention is to create a bandsaw blade that will give improved surface finish of the work pieces.

The invention thus comprises a bandsaw blade comprising a strip and teeth projecting therefrom, which teeth are arranged in recurring main groups, each main group comprising recurring geometrical subgroups and recurring setting subgroups,
each geometrical subgroup comprising teeth of at least two different heights, high and low respectively, and defining a height pattern repeating itself within the group, the high teeth being of substantially equal height and the low teeth being of substantially equal height which is less than the height of the high teeth, each geometrical subgroup comprising an even number of teeth,
each setting subgroup comprising teeth of at least five types, normal left set, medium left set, unset, medium right set and normal right set respectively, and defining a setting pattern repeating itself within the group, the normal set teeth being of substantially equal setting and the medium set teeth being of substantially equal setting which is less than the setting of the normal set teeth, each setting subgroup comprising six teeth. The setting of each one of the medium set teeth is 40-60 % of the setting of each one of the normal set teeth, the first tooth and every third tooth after that in each setting subgroup is an unset tooth and the recurring main group length is neither equal to the setting subgroup length nor equal to the geometrical subgroup length.

Each low tooth may be at least 0.1 mm lower than any high tooth before setting.

The first tooth in each geometrical subgroup may be a high tooth. Every other tooth in each geometrical subgroup may be a high tooth. The second tooth and every other tooth in each geometrical subgroup may be a low tooth. The first tooth in the main recurring group may be the first tooth in the first recurring geometrical subgroup and the first tooth in the first recurring setting subgroup.

The first tooth in each setting subgroup may be an unset tooth. The second tooth and every third tooth after that in each setting subgroup may be a tooth which is set to the left. The third tooth and every third tooth after that in each setting subgroup may be a tooth which is set to the right. The fifth tooth and every sixth tooth after that in each setting subgroup may be a tooth which is medium left set. The third tooth and every sixth tooth after that in each setting subgroup may be a tooth which is medium right set. The second tooth and every sixth tooth after that in each setting subgroup may be a tooth which is normal left set. The sixth tooth and every sixth tooth after that in each setting subgroup may be a tooth which is normal right set.

The second tooth and every third tooth after that in each setting subgroup may be a tooth which is set to the right. The third tooth and every third tooth after that in each setting subgroup may be a tooth which is set to the left. The fifth tooth and every sixth tooth after that in each setting subgroup may be a tooth which is medium right set. The third tooth and every sixth tooth after that in each setting subgroup may be a tooth which is medium left set. The second tooth and every sixth tooth after that In each setting subgroup may be a tooth which is normal right set. The sixth tooth and every sixth tooth after that in each setting subgroup may be a tooth which is normal left set.

### List of drawings

Figure 1 shows , in a side view, a main part of a bandsaw blade according to the invention, the main part comprising a recurring main group of teeth.
Figure 2 shows, in a top view, a subpart of the main part of the bandsaw blade according to figure 1, the subpart comprising a recurring setting subgroup of teeth.
Figure 3 shows, in a schematic cross section, a part of a prior art bandsaw blade with its set configuration.
Figure 4 shows, in a schematic cross section, the subpart according to figure 2 with its set configuration.

### Description of modes of execution

The first operation in the manufacture of bandsaw teeth is cutting the teeth in the edge of a steel strip by grinding, milling or blanking. The teeth can have different heights and different pitch distances, i.e. different geometrical appearances from the variable spacing between teeth. According to the present invention, differences in height are necessary, different tooth pitches are conducive to achieving optimum benefit of the invention. If the steel strip is made of two alloys, as is commonly the case, the teeth or the tips of the teeth will be made of high-speed steel, while the body or backing of the blade is made of hardened fatigue resistant material. In many cases, however, tungsten carbide tips are welded or soldered onto the tooth tips, to get even higher abrasion resistance. The teeth are then set by knocking them to either side, except for the ones that are to remain unset.

According to this invention, recurrent main group is achieved by combining a subgroup for height and pitch, i.e. a geometrical subgroup, with a short subgroup for setting as provided for in US, B1, 6 269 722. It is important to the invention that the recurring main group length is neither equal to the setting subgroup length nor equal to the geometrical subgroup length.

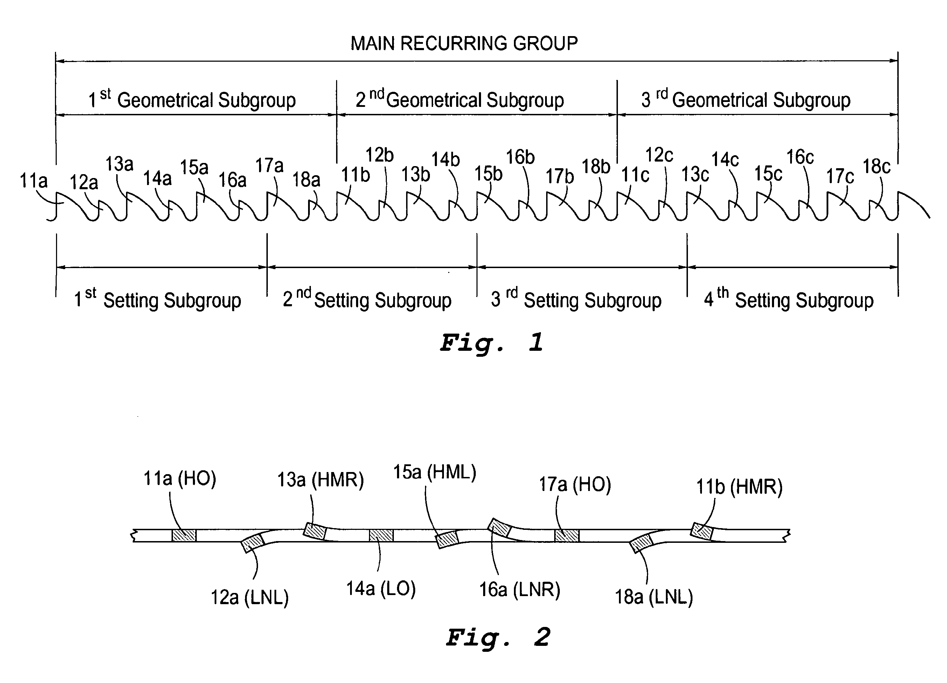

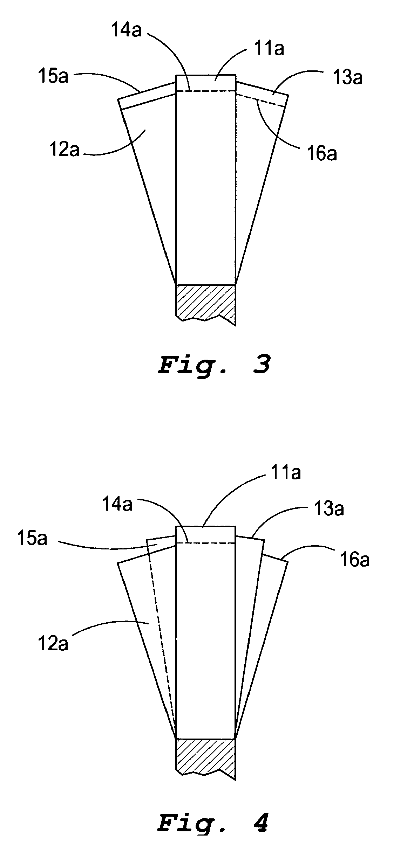

Figure 1 shows a part of a bandsaw blade 1 according to the invention with a recurrent geometrical subgroup of eight teeth 11 a-18a of two different heights, high (H) and low (L) respectively with different pitches. The geometrical subgroup is combined with a short recurrent subgroup of six teeth 11a-16a of five setting types, normal left set (NL), medium left set (ML), unset (O), medium right set (MR) and normal right set (NR) respectively, see figures 2 and 4. As is common with saw blades for metal, prior to setting, the front rake face of every tooth is normal to the band sides. The first tooth 11 a is high and unset, the second tooth 12a is low and set normal left, the third tooth 13a is high and medium set right, the fourth tooth 14a is low and unset, the fifth tooth 15a is high and set medium left, the sixth tooth 16a is low and set normal right. No two teeth in this group of six (HO-LNL-HMR-LO-HML-LNR) have the same combination of height and setting, and each of the six possible combinations occurs once.

The second setting subgroup starts with the seventh tooth 17a and is, once again, high and unset and the eight tooth 18a is, once again, low and set normal left. This second setting subgroup compromises teeth 17a-14b with the (HO-LNL-HMR-LO-HML-LNR) setting pattern. The third setting subgroup comprises teeth 15b-12c and the fourth setting subgroup comprises teeth 13c-18c. These three geometrical and four setting subgroups constitute the main recurrent group that is 24 teeth in length. If the geometrical subgroup comprised 10 teeth the main recurrent group would be 30 teeth in length. It is desirable that the geometrical subgroup contains as many teeth as possible, providing it conforms to the even number of teeth not divisible by six requirement. The only limit to the length of the subgroup being the size limitation of the toothing equipment. For example if the length of the geometrical subgroup is 4 inches (0.1 m) and the tooth pitch pattern is 2/3 variable pitch, i.e. the tooth spacing varies between 0.5 and 0.333 inches (0.0125 and 0.0083 m), it would most likely contain 10 teeth. The main recurring group would be 12 inches (0.3 m) in length, contain 30 teeth that would be six times the length of a comparable blade described in either of US, A, 4 727 788 or US, A, 5 410 935. This greatly reduces the tendency of the blade to generate repetitive oscillatory vibration patterns.

By the present invention the concept of low teeth being set heavier than high teeth is utilized. Compared to what is evident from US, B1, 6 269 722 the number of actively cutting teeth increases from three to five of every six teeth without increasing feed cutting forces and thereby maintaining ability to cut difficult materials. By increasing the cutting teeth from three to five the performance in cutting smaller sections is greatly improved as more teeth remain in contact with the work piece and forces on individual teeth is reduced. The width of the chips removed by the normal set low tooth and the medium set high tooth are half the width of the chip previously removed by the wide set high tooth, therefore the lateral forces on each tooth is halved and are spread out over more teeth resulting in less lateral vibration and improved surface finish.

Tests were conducted to compare performance of a standard production blade according to US, B1, 6 269 722 with that of a modified blade according to the present invention. All blades tested were from the same production run to exclude influences from other parameters. The tests were divided into two separate categories, the first to evaluate the general performance of blades in different materials with large cross sectional areas, the second to evaluate performance when cutting smaller sections known to cause tooth damage. For all test series a standard production blade (Ref A) and a blade with modified set pattern (Ref B), according to invention, were tested. The blades had the following specifications:

| | |
|---|---|
| Product code | 3854 |
| Bandwidth in mm | 41 |
| Band thickness in mm | 1.3 |
| Tooth form by grinding | PHG |
| Variable tooth pitch | 2/3 |
| Band length in mm | 5800 |

### Test 1

A total of 12 cuts were made for each blade. The vertical force and noise levels were measured and recorded for every cut. The forces were measured in Newtons and the noise level in decibels. Noise levels correspond to vibration levels in cut.

| Material | Dimensions | Band Speed | Feed Rate | # Cuts | Feed Force | | Noise | |
|---|---|---|---|---|---|---|---|---|
| | (mm) | (m/min.) | (mm/min.) | | Ref A | Ref B | Ref A | Ref B |
| | | | | | | | | |

| Hot working | | | | | | | | |
|---|---|---|---|---|---|---|---|---|
| Tool steel | 111 x190 | 39 | 13 | 2 | 535 | 490 | 97.8 | 83.5 |
| | | | | | | | | |

| Stainless Steel | | | | | | | | |
|---|---|---|---|---|---|---|---|---|
| SS2377 | 107x140 | 26 | 9.4 | 2 | 744 | 704 | 109 | 107 |
| | | | | | | | | |

| Ball Bearing Steel | | | | | | | | |
|---|---|---|---|---|---|---|---|---|
| 52100 | Rd 115 | 65 | 44 | 5 | 725 | 716 | 94.9 | 94 |
| | | | | | | | | |

| Cold Working | | | | | | | | |
|---|---|---|---|---|---|---|---|---|
| Tool Steel | 45x145 | 30 | 7.8 | 2 | 496 | 483 | 103.4 | 100 |

As expected the cutting forces were very close and the noise levels for the trial blade were noticeably lower verifying the effect of the invention on reducing vibration.

### Test 2

A total of 9 cuts were made for each blade. The vertical cutting forces and noise levels were measured and recorded. The work pieces were round and square tubing known to cause chipping and would not be a normal application for the standard Ref A blade.

| Material | Dimensions | Blade Speed | Feed Rate | # of cuts | Feed Force | | Noise | |
|---|---|---|---|---|---|---|---|---|
| | (mm) | (m/min.) | (mm/min.) | | Ref A | Ref B | Ref A | Ref B |
| | | | | | | | | |
| SS304L | Rd 300x27 | 47 | 18 | 3 | 513 | 497 | 88.9 | 87.2 |
| | | | | | | | | |
| SS316L | Sq 100x200x10 | 44 | 16 | 3 | 354 | 310 | 91.4 | 89.3 |
| | | | | | | | | |
| SS316L | Sq 100x200x10 | 44 | 40 | 3 | 804 | 652 | 93.1 | 90 |

The vertical cutting forces and also the noise levels during the test are generally lower for the Ref B blade, which was set according to the invention. It is clear that the tougher the blade is run the better the performance of the Ref B blade.

The blades were cut into sections and inspected for tooth chipping with a stereomicroscope. The teeth were evaluated from a completely undamaged tooth given the value of 0% to the full chipping of the edge given a value 100%. The results for the two blades is as follows:

| | Average Chipping Percentage (%) | |
|---|---|---|
| | High Teeth | Low Teeth |
| Ref A Blade | 88 | 16 |
| Ref B Blade | 51 | 8 |

It is very evident from these results that the chipping damage for the Ref B, modified according to the invention, is 42-50 % less than that for the Ref A blade based on prior art. From the results of all the tests it is very clear that the present invention achieved all of its objectives.

The invention is not limited to the modes of execution shown here but may be varied in accordance with the following patent claims.

## Claims

1. Bandsaw blade comprising a strip and teeth (11 a-c, 12a-c, 13a-c, 14a-c, 15a-c, 16a-c, 17a-c, 18a-c) projecting therefrom, which teeth are arranged in recurring main groups, each main group comprising recurring geometrical subgroups and recurring setting subgroups,
each geometrical subgroup comprising teeth (11a-18a,11 b-18b, 11c-18c) of at least two different heights, high (11a-c, 13a-c, 15a-c, 17a-c) and low (12a-c, 14a-c, 16a-c, 18a-c) respectively, and defining a height pattern repeating itself within the group, the high teeth being of substantially equal height and the low teeth being of substantially equal height which is less than the height of the high teeth, each geometrical subgroup comprising an even number of teeth,
each setting subgroup comprising teeth (11a-16a, 17a-14b, 15b-12c, 13c-18c) of at least five types, normal left set (12a, 18a, 16b, 14c), medium left set (15a, 13b, 11c, 17c), unset (11a, 14a, 17a, 12b, 15b, 18b, 13c, 16c), medium right set (13a, 11 b, 17b, 15c) and normal right set (16a, 14b, 12c, 17c) respectively, and defining a setting pattern repeating itself within the group, the normal set teeth being of substantially equal setting and the medium set teeth being of substantially equal setting which is less than the setting of the normal set teeth, each setting subgroup comprising six teeth, the first tooth (11a, 17a, 15b, 13c) and every third tooth (14a, 12b, 18b, 16c) after that in each setting subgroup being an unset tooth **characterized by**
the setting of each one of the medium set teeth (15a, 13b, 11c, 17c, 13a, 11 b, 17b, 15c) being 40-60 % of the setting of each one of the normal set teeth (12a, 18a, 16b, 14c, 16a, 14b, 12c, 17c), and
the recurring main group length being neither equal to the setting subgroup length nor equal to the geometrical subgroup length.

2. Bandsaw blade according to claim 1, where each low tooth (12a-c, 14a-c, 16a-c, 18a-c) is at least 0.1 mm lower than any high tooth (11a-c, 13a-c, 15a-c, 17a-c) before setting.

3. Bandsaw blade according to any of the preceding claims, where the first tooth (11a-c) in each geometrical subgroup is a high tooth.

4. Bandsaw blade according to any of the preceding claims, where every other tooth (11a-c, 13a-c, 15a-c, 17a-c) in each geometrical subgroup is a high tooth.

5. Bandsaw blade according to any of the preceding claims, where the second tooth (12a-c) and every other tooth (12a-c, 14a-c, 16a-c, 18a-c) in each geometrical subgroup is a low tooth.

6. Bandsaw blade according to any of the preceding claims, where the first tooth (11a) in the main recurring group is the first tooth in the first recurring geometrical subgroup and the first tooth in the first recurring setting subgroup.

7. Bandsaw blade according to any of the preceding claims, where the first tooth (11a, 17a, 15b, 13c) in each setting subgroup is an unset tooth.

8. Bandsaw blade according to any of the preceding claims, where the second tooth (12a, 18a, 16b, 14c) and every third tooth (15a, 13b, 11c, 17c) after that in each setting subgroup is a tooth which is set to the left.

9. Bandsaw blade according to any of the preceding claims, where the third tooth (13a, 11 b, 17b, 15c) and every third tooth (16a, 14b, 12c, 18c) after that in each setting subgroup is a tooth which is set to the right.

10. Bandsaw blade according to any of the preceding claims, where the fifth tooth (15a, 13b, 11c, 17c) and every sixth tooth after that in each setting subgroup is a tooth which is medium left set.

11. Bandsaw blade according to any of the preceding claims, where the third tooth (13a, 11b, 17b, 15c) and every sixth tooth after that in each setting subgroup is a tooth which is medium right set.

12. Bandsaw blade according to any of the preceding claims, where the second tooth (12a, 18a, 16b, 14c) and every sixth tooth after that in each setting subgroup is a tooth which is normal left set.

13. Bandsaw blade according to any of the preceding claims, where the sixth tooth (16a, 14b, 12c, 18c) and every sixth tooth after that in each setting subgroup is a tooth which is normal right set.

14. Bandsaw blade according to any of the claims 1-7, where the second tooth (12a, 18a, 16b, 14c) and every third tooth (15a, 13b, 11c, 17c) after that in each setting subgroup is a tooth which is set to the right.

15. Bandsaw blade according to any of the claims 1-7 and 14, where the third tooth (13a, 11b, 17b, 15c) and every third tooth (16a, 14b, 12c, 18c) after that in each setting subgroup is a tooth which is set to the left.

16. Bandsaw blade according to any of the claims 1-7, 14 and 15, where the fifth tooth (15a, 13b, 11 c, 17c) and every sixth tooth after that in each setting subgroup is a tooth which is medium right set.

17. Bandsaw blade according to any of the claims 1-7 and 14-18, where the third tooth (13a, 11 b, 17b, 15c) and every sixth tooth after that in each setting subgroup is a tooth which is medium left set.

18. Bandsaw blade according to any of the claims 1-7 and 14-17, where the second tooth (12a, 18a, 16b, 14c) and every sixth tooth after that in each setting subgroup is a tooth which is normal right set.

19. Bandsaw blade according to any of the claims 1-7 and 14-18, where the sixth tooth (18a, 14b, 12c, 18c) and every sixth tooth after that in each setting subgroup is a tooth which is normal left set.

## Patentansprüche

1. Bandsägeblatt mit einem Band und von diesem vorstehenden Zähnen (11a-c, 12a-c, 13a-c, 14a-c, 15a-c, 16a-c, 17a-c, 18a-c), die in wiederkehrenden Hauptgruppen angeordnet sind, wobei jede Hauptgruppe wiederkehrende geometrische Untergruppen und wiederkehrende Schränkuntergruppen hat,
jede geometrische Untergruppe Zähne (11a-18a, 11b-18b, 11c-18c) mindestens zweier unterschiedlicher Höhen, hohe (11a-c, 13a-c, 15a-c, 17a-c) bzw. niedrige (12a-c, 14a-c, 16a-c, 18a-c) hat und ein sich selbst in der Gruppe wiederholendes Höhenmuster bildet, wobei die hohen Zähne im wesentlichen gleich hoch sind und die niedrigen Zähne im wesentlichen gleich hoch und niedriger sind als die Höhe der hohen Zähne und jede geometrische Untergruppe eine gerade Anzahl Zähne hat,
jede Schränkuntergruppe Zähne (11a-16a, 17a-14b, 15b-12c, 13c-18c) von mindestens fünf Typen hat, normal links geschränkt (12a, 18a, 16b, 14c), mittelmäßig links geschränkt (15a, 13b, 11c, 17c), ungeschränkt (11a, 14a, 17a, 12b, 15b, 18b, 13c, 16c), mittelmäßig rechts geschränkt (13a, 11b, 17b, 15c) bzw. normal rechts geschränkt (16a, 14b, 12c, 17c), wobei die Zähne ein sich selbst in der Gruppe wiederholendes Schränkmuster bilden, die normal geschränkten Zähne im wesentlichen gleiche Schränkung haben und die mittelmäßig geschränkten Zähne im wesentlichen gleiche Schränkung haben, die kleiner ist als die Schränkung der normal geschränkten Zähne, jede Schränkungsuntergruppe sechs Zähne aufweist, der erste Zahn (11a, 17a, 15b, 13c) und jeder dritte Zahn (14a, 12b, 18b, 16c) nach diesem in jeder Schränkuntergruppe ein ungeschränkter Zahn ist, **dadurch gekennzeichnet, daß**
die Schränkung jedes der mittelmäßig geschränkten Zähne (15a, 13b, 11c, 17c, 13a, 11b, 17b, 15c) 40-60% der Schränkung jedes der normal geschränkten Zähne (12a, 18a, 16b, 14c, 16a, 14b, 12c, 17c) ist und
die Länge der wiederkehrenden Hauptgruppe weder gleich der Länge der Schränkungsuntergruppe ist noch gleich der Länge der geometrischen Untergruppe.

2. Bandsägeblatt nach Anspruch 1, wobei jeder niedrige Zahn (12a-c, 14a-c, 16a-c, 18a-c) mindestens 0,1 mm niedriger ist als jeder hohe Zahn (11a-c, 13a-c, 15a-c, 17a-c) vor dem Schränken.

3. Bandsägeblatt nach einem der vorhergehenden Ansprüche, wobei der erste Zahn (11a-c) in jeder geometrischen Untergruppe ein hoher Zahn ist.

4. Bandsägeblatt nach einem der vorhergehenden Ansprüche, wobei jeder zweite Zahn (11a-c, 13a-c, 15a-c, 17a-c) in jeder geometrischen Untergruppe ein hoher Zahn ist.

5. Bandsägeblatt nach einem der vorhergehenden Ansprüche, wobei der zweite Zahn (12a-c) und jeder zweite Zahn (12a-c, 14a-c, 16a-c, 18a-c) in jeder geometrischen Untergruppe ein niedriger Zahn ist.

6. Bandsägeblatt nach einem der vorhergehenden Ansprüche, wobei der erste Zahn (11a) in der wiederkehrenden Hauptgruppe der erste Zahn in der ersten wiederkehrenden geometrischen Untergruppe und der erste Zahn in der ersten wiederkehrenden Schränkuntergruppe ist.

7. Bandsägeblatt nach einem der vorhergehenden Ansprüche, wobei der erste Zahn (11a, 17a, 15b, 13c) in jeder Schränkuntergruppe ein ungeschränkter Zahn ist.

8. Bandsägeblatt nach einem der vorhergehenden Ansprüche, wobei der zweite Zahn (12a, 18a, 16b, 14c) und jeder dritte Zahn (15a, 13b, 11c, 17c) nach diesem in jeder Schränkuntergruppe ein Zahn ist, der nach links geschränkt ist.

9. Bandsägeblatt nach einem der vorhergehenden Ansprüche, wobei der dritte Zahn (13a, 11b, 17b, 15c) und jeder dritte Zahn (16a, 14b, 12c, 18c) nach diesem in jeder Schränkuntergruppe ein Zahn ist, der nach rechts geschränkt ist.

10. Bandsägeblatt nach einem der vorhergehenden Ansprüche, wobei der fünfte Zahn (15a, 13b, 11c, 17c) und jeder sechste Zahn nach diesem in jeder Schränkungsuntergruppe ein Zahn ist, der mittelmäßig nach links geschränkt ist.

11. Bandsägeblatt nach einem der vorhergehenden Ansprüche, wobei der dritte Zahn (13a, 11b, 17b, 15c) und jeder sechste Zahn nach diesem in jeder Schränkungsuntergruppe ein Zahn ist, der mittelmäßig nach rechst geschränkt ist.

12. Bandsägeblatt nach einem der vorhergehenden Ansprüche, wobei der zweite Zahn (12a, 18a, 16b, 14c) und jeder sechste Zahn nach diesem in jeder Schränkungsuntergruppe ein Zahn ist, der normal links geschränkt ist.

13. Bandsägeblatt nach einem der vorhergehenden Ansprüche, wobei der sechste Zahn (16a, 14b, 12c, 18c) und jeder sechste Zahn nach diesem in jeder Schränkungsuntergruppe ein Zahn ist, der normal rechts geschränkt ist.

14. Bandsägeblatt nach einem der Ansprüche 1-7, wobei der zweite Zahn (12a, 18a, 16b, 14c) und jeder dritte Zahn (15a, 13b, 11 c, 17c) nach diesem in jeder Schränkungsuntergruppe ein Zahn ist, der nach rechts geschränkt ist.

15. Bandsägeblatt nach einem der Ansprüche 1-7 und 14, wobei der dritte Zahn (13a, 11b, 17b, 15c) und jeder dritte Zahn (16a, 14b, 12c, 18c) nach diesem in jeder Schränkungsuntergruppe ein Zahn ist, der nach links geschränkt ist.

16. Bandsägeblatt nach einem der Ansprüche 1-7, 14 und 15, wobei der fünfte Zahn (15a, 13b, 11 c, 17c) und jeder sechste Zahn nach diesem in jeder Schränkungsuntergruppe ein Zahn ist, der mittelmäßig rechts geschränkt ist.

17. Bandsägeblatt nach einem der Ansprüche 1-7 und 14-16, wobei der dritte Zahn (13a, 11b, 17b, 15c) und jeder sechste Zahn nach diesem in jeder Schränkungsuntergruppe ein Zahn ist, der mittelmäßig links geschränkt ist.

18. Bandsägeblatt nach einem der Ansprüche 1-7 und 14-17, wobei der zweite Zahn (12a, 18a, 16b, 14c) und jeder sechste Zahn nach diesem in jeder Schränkungsuntergruppe ein Zahn ist, der normal rechts geschränkt ist.

19. Bandsägeblatt nach einem der Ansprüche 1-7 und 14-18, wobei der sechste Zahn (16a, 14b, 12c, 18c) und jeder sechste Zahn nach diesem in jeder Schränkungsuntergruppe ein Zahn ist, der normal links geschränkt ist.

## Revendications

1. Lame de scie à ruban comprenant une bande et des dents (11a-c, 12a-c, 13a-c, 14a-c, 15a-c, 16a-c, 17a-c, 18a-c) faisant saillie à partir de celle-ci, lesquelles dents sont agencées en groupes principaux récurrents, chaque groupe principal comprenant des sous-groupes géométriques récurrents et des sous-groupes d'avoyage récurrents,
chaque sous-groupe géométrique comprenant des dents (11a-18a, 11b-18b, 11c-18c) d'au moins deux hauteurs différentes, respectivement une haute (11a-c, 13a-c, 15a-c, 17a-c) et une basse (12a-c, 14a-c, 16a-c, 18a-c), et définissant un modèle de hauteurs se répétant à l'intérieur du groupe, les dents hautes étant sensiblement de même hauteur et les dents basses étant sensiblement de même hauteur, cette dernière étant inférieure à la hauteur des dents hautes, chaque sous-groupe géométrique comprenant un nombre pair de dents,
chaque sous-groupe d'avoyage comprenant des dents (11a-16a, 17a-14b, 15b-12c, 13c-18c) d'au moins cinq types, respectivement avoyé normalement à gauche (12a, 18a, 16b, 14c), avoyé modérément à gauche (15a, 13b, 11c, 17c), non avoyé (11a, 14a, 17a, 12b, 15b, 18b, 13c, 16c), avoyé modérément à droite (13a, 11b, 17b, 15c) et avoyé normalement à droite (16a, 14b, 12c, 17c), et définissant un modèle d'avoyage se répétant à l'intérieur du groupe, les dents avoyées normalement présentant un avoyage sensiblement identique et les dents avoyées modérément présentant un avoyage sensiblement identique, ce dernier étant moins prononcé que l'avoyage des dents avoyées normalement, chaque sous-groupe d'avoyage comprenant six dents, la première dent (11a, 17a, 15b, 13c) puis une dent sur trois (14a, 12b, 18b, 16c) après celle-ci dans chaque sous-groupe d'avoyage étant une dent non avoyée, **caractérisée en ce que**
l'avoyage de chacune des dents avoyées modérément (15a, 13b, 11c, 17c, 13a, 11b, 17b, 15c) représente de 40 à 60 % de l'avoyage de chacune des dents avoyées normalement, (12a, 18a, 16b, 14c, 16a, 14b, 12c, 17c),
la longueur des groupes principaux récurrents n'étant égale ni à la longueur des sous-groupes d'avoyage, ni à la longueur des sous-groupes géométriques.

2. Lame de scie à ruban selon la revendication 1, dans laquelle chaque dent basse (12a-c, 14a-c, 16a-c, 18a-c) est inférieure d'au moins 0,1 mm à une quelconque dent haute (11a-c, 13a-c, 15a-c, 17a-c) avant l'avoyage.

3. Lame de scie à ruban selon l'une quelconque des revendications précédentes, dans laquelle la première dent (11a-c) dans chaque sous-groupe géométrique est une dent haute.

4. Lame de scie à ruban selon l'une quelconque des revendications précédentes, dans laquelle une dent sur deux (11a-c, 13a-c, 15a-c, 17a-c) dans chaque sous-groupe géométrique est une dent haute.

5. Lame de scie à ruban selon l'une quelconque des revendications précédentes, dans laquelle la deuxième dent (12a-c) puis une dent sur deux (12a-c, 14a-c, 16a-c, 18a-c) dans chaque sous-groupe géométrique est une dent basse.

6. Lame de scie à ruban selon l'une quelconque des revendications précédentes, dans laquelle la première dent (11a) dans le groupe principal récurrent est la première dent dans le premier sous-groupe géométrique récurrent et la première dent dans le premier sous-groupe d'avoyage récurrent.

7. Lame de scie à ruban selon l'une quelconque des revendications précédentes, dans laquelle la première dent (11a, 17a, 15b, 13c) dans chaque sous-groupe d'avoyage est une dent non avoyée.

8. Lame de scie à ruban selon l'une quelconque des revendications précédentes, dans laquelle la deuxième dent (12a, 18a, 16b, 14c) puis une dent sur trois (15a, 13b, 11c, 17c) après celle-ci dans chaque sous-groupe d'avoyage est une dent avoyée à gauche.

9. Lame de scie à ruban selon l'une quelconque des revendications précédentes, dans laquelle la troisième dent (13a, 11b, 17b, 15c) puis une dent sur trois (16a, 14b, 12c, 18c) après celle-ci dans chaque sous-groupe d'avoyage est une dent avoyée à droite.

10. Lame de scie à ruban selon l'une quelconque des revendications précédentes, dans laquelle la cinquième dent (15a, 13b, 11c, 17c) puis une dent sur six après celle-ci dans chaque sous-groupe d'avoyage est une dent avoyée modérément à gauche.

11. Lame de scie à ruban selon l'une quelconque des revendications précédentes, dans laquelle la troisième dent (13a, 11b, 17b, 15c) puis une dent sur six après celle-ci dans chaque sous-groupe d'avoyage est une dent avoyée modérément à droite.

12. Lame de scie à ruban selon l'une quelconque des revendications précédentes, dans laquelle la deuxième dent (12a, 18a, 16b, 14c) puis une dent sur six après celle-ci dans chaque sous-groupe d'avoyage est une dent avoyée normalement à gauche.

13. Lame de scie à ruban selon l'une quelconque des revendications précédentes, dans laquelle la sixième dent (16a, 14b, 12c, 18c) puis une dent sur six après celle-ci dans chaque sous-groupe d'avoyage est une dent avoyée normalement à droite.

14. Lame de scie à ruban selon l'une quelconque des revendications 1 à 7, dans laquelle la deuxième dent (12a, 18a, 16b, 14c) puis une dent sur trois (15a, 13b, 11c, 17c) après celle-ci dans chaque sous-groupe d'avoyage est une dent avoyée à droite.

15. Lame de scie à ruban selon l'une quelconque des revendications 1 à 7 et 14, dans laquelle la troisième dent (13a, 11b, 17b, 15c) puis une dent sur trois (16a, 14b, 12c, 18c) après celle-ci dans chaque sous-groupe d'avoyage est une dent avoyée à gauche.

16. Lame de scie à ruban selon l'une quelconque des revendications 1 à 7, 14 et 15, dans laquelle la cinquième dent (15a, 13b, 11c, 17c) puis une dent sur six après celle-ci dans chaque sous-groupe d'avoyage est une dent avoyée modérément à droite.

17. Lame de scie à ruban selon l'une quelconque des revendications 1 à 7 et 14 à 16, dans laquelle la troisième dent (13a, 11b, 17b, 15c) puis une dent sur six après celle-ci dans chaque sous-groupe d'avoyage est une dent avoyée modérément à gauche.

18. Lame de scie à ruban selon l'une quelconque des revendications 1 à 7 et 14 à 17, dans laquelle la deuxième dent (12a, 18a, 16b, 14c) puis une dent sur six après celle-ci dans chaque sous-groupe d'avoyage est une dent avoyée normalement à droite.

19. Lame de scie à ruban selon l'une quelconque des revendications 1 à 7 et 14 à 18, dans laquelle la sixième dent (16a, 14b, 12c, 18c) puis une dent sur six après celle-ci dans chaque sous-groupe d'avoyage est une dent avoyée normalement à gauche.
